# EUROPÄISCHE PATENTSCHRIFT

(11) **EP 3 599 009 B1**
(45) Veröffentlichungstag und Bekanntmachung des Hinweises auf die Patenterteilung: **23.06.2021**
(21) Anmeldenummer: 18185376.3
(22) Anmeldetag: 25.07.2018
(51) Int. Cl.: B01D 46/10, B01D 46/52

(54) **FILTER MIT GELOCHTEN SEPARATORBLECHEN**
FILTER WITH PERFORATED SEPARATOR SHEETS
FILTRE POURVU DE TÔLES DE SÉPARATION PERFORÉES

(43) Veröffentlichungstag der Anmeldung: 29.01.2020
(73) Patentinhaber: Carl Freudenberg KG, 69469 Weinheim (DE)
(72) Erfinder: Ewald, Christian, 64668 Rimbach (DE); Becker, Jürgen, 67378 Zeiskam (DE)

(56) Entgegenhaltungen:
- DE-A1- 1 761 318
- DE-A1- 2 557 444
- JP-A- 2002 166 113
- US-A1- 2008 006 575

## Beschreibung

Die Erfindung betrifft einen Filter zur Reinigung von Luft gemäß dem Oberbegriff von Anspruch 1.

### Stand der Technik

Filter in Form von Kassetten sind aus dem Stand der Technik bekannt. So ist in der US 4,610,706 B ein Kassettenfilter als HEPA-Filter gezeigt. Der Filter besitzt eine Mehrzahl von parallel zueinander angeordneten Filtermatten, wobei Separatoren verwendet werden, um die Filtermatten auf Abstand zueinander zu halten. Die Separatoren bestehen aus zickzackförmig strukturiertem Filtermaterial.

Im Anwendungsbereich von Hochtemperaturfiltern ist ein deratiger Filter nicht einsetzbar und es kommen Separatoren aus Metallblechen zum Einsatz, welche zwischen Filtermatten positioniert sind. Die Metallbleche können gefaltet (z.B. plissiert), geriffelt oder gewellt sein. Sie halten vorteilhafter Weise hohen Temperaturen stand, weisen jedoch ein hohes Gewicht auf, sodass das Gesamtgewicht des Filters vergrößert wird. Der Filter wird dadurch schwerer zu handhaben, besonders bei einem Filtertausch. Auch müssen nach dem Filtertausch hohe Massen entsorgt werden.

Allgemein nachteilig an der Verwendung von Separatoren ist, dass diese den Luftstrom entlang der Filtermatten beeinflussen und den Volumenstrom durch den Filter reduzieren.

Filter mit gelochten Separatorblechen sind bereits bekannt aus der DE 17 61 318 A1 , DE 25 57 444 A1 und US 2008 006575 A1.

### Aufgabenstellung

Aufgabe der vorliegenden Erfindung ist es einen Filter zu schaffen, der einen hohen Volumenstrom von zu filternder Luft erlaubt. Weitere Aufgabe ist es einen Filter zu schaffen, der ein geringeres Gewicht aufweist, um eine einfachere Handhabbarkeit zu gewährleisten.

### Technische Lösung

Gelöst wird diese Aufgabe durch einen Filter mit den Merkmalen von Anspruch 1.

Der erfindungsgemäße Filter dient der Reinigung von durchströmender Luft und weist ein rahmenförmiges Gehäuse auf und in dem Gehäuse angeordnete Lagen eines Filtermediums und Separatorbleche, wobei die Lagen des Filtermediums und in Durchströmungsrichtung ausgerichtet sind und zwischen je zwei Lagen des Filtermediums je ein Separatorblech angeordnet ist, welches als Abstandshalter zwischen den beiden Lagen des Filtermediums wirkt. Die Lagen des Filtermediums können vorzugsweise parallel zueinander oder annähernd parallel in einen kleinen Winkel von bis zu 1° zueinander ausgereichtet sein. Erfindungsgemäß wurde als vorteilhaft erkannt, die Separatorbleche mit einer Lochung zu versehen, d. h. die Separatorbleche weisen über ihre Fläche eine Vielzahl von Löchern auf. Dadurch können in vorteilhafter Weise die Strömungsbedingungen der Luft in dem Filter verbessert und insbesondere der Strömungswiderstand gesenkt werden. Gleichzeitig wird eine maximale Staubspeicherfähigkeit des Filters gewährleistet. Weiter vorteilhaft ist, dass der Filter aufgrund der Lochung eine Gewichtsreduzierung erfährt und damit leichter handhabbar, d. h. ergonomischer ist. Ein zusätzlicher Vorteil ergibt sich am Laufzeitende des Filters, wenn dieser entsorgt werden muss: Bei der Entsorgung und der Entsorgungslogistik fällt eine geringere Abfallmasse an. Durch die Verbesserung des Strömungsverhaltens im Filter kann die Filterleistung verbessert werden.
Wird das Gesamtgewicht des Filters in möglichen anwendungsfällen nicht als problematisch angesehen, so kann bei unverändertem Gewicht im Vergleich zu ungelochten Separatorblechen die Materialstärke und damit die Festigkeit der Separatorbleche dank der Lochung erhöht werden.
Beim erfindungsgemäßen Filter ist ein jeweiliges Separatorblech mit einer progressiven, d. h. zunehmenden Lochung versehen. Die Lochung ist dabei derart, dass der relative Flächenanteil der Löcher zum abströmseitigen Ende, im Vergleich zum anströmseitigen Ende des Separatorblechs, hin zunimmt. Die progressive Lochung kann dabei durch eine Variation der Dichte der Löcher, d. h. der Anzahl der Löcher pro Fläche, oder durch eine Variation der Größe der Löcher über die Fläche erreicht werden. Durch die progressive Lochung kann das Strömungsverhalten in dem Filter weiter optimiert werden und die Strömungsgeschwindigkeit der Luft vom anströmseitigen Ende hin zum abströmseitigen Ende des Filters angeglichen werden. Dadurch kann in vorteilhafter Weise die Filtrationsleistung weiter gesteigert werden.

In besonders vorteilhafter und daher bevorzugter Weiterbildung sind die Separatorbleche des Filters über ihre Fläche geriffelt, gewellt oder gefaltet, z.B. plissiert, und bestehen aus einer dicken Folie oder einem dünnen Blech. Die Höhe der Riffelung, Wellen bzw. Falten bewirkt dann den Abstand zwischen den beiden Lagen des Filtermediums.

Besonders vorteilhaft ist es, wenn die Separatorbleche aus Aluminium gefertigt sind. Derartige Separatorbleche sind relativ leicht und weisen gleichzeitig eine gute Stabilität und Festigkeit auf.

Die Löcher der Lochung können in unterschiedlichen Formen ausgebildet sein: rund, zum Beispiel kreisrund oder oval, oder aber eckig, zum Beispiel quadratisch oder in Wabenform, wie bei einer hexagonalen Wabe.

In einer besonders vorteilhaften und daher bevorzugten Ausführung des Filters ist das Filtermedium plissiert und/oder aus einem Glasfasermedium, zum Beispiel einem Glasfaserpapier oder einem Mikroglasfaserpapier. Ein solcher Filter weist in vorteilhafter Weise eine große wirksame Filtrationsfläche auf und kann auch bei höheren Temperaturen der zu filternden Luft eingesetzt werden.

Bei dem Filter kann es sich in vorteilhafter Weise um einen Kassettenfilter handeln. Insbesondere um einen HEPA-Filter zur Anwendung in Reinraumanlagen von Lebensmittel- und Pharmaindustrie, der Mikrochipherstellung oder in Kliniken.

Auch könnte der Filter als Hochtemperaturfilter ausgelegt sein für Anwendungen von über 100 Grad Celsius. Dazu kann als Material für die Separatoren Aluminium und als Filtermaterial ein Glasfaserpapier verwendet werden. Ein solcher Hochtemperaturfilter kann zum Beispiel in industriellen Trocknungsanlagen, wie Lacktrocknungsanlagen der Automobilindustrie, zum Einsatz gelangen.

Nachfolgend ist ein nicht zur Erfindung gehörendes Verfahren zur Herstellung eines Separatorblechs für ein wie obenstehend beschriebenen Filter beschrieben: Gemäß einer ersten Verfahrensvariante wird in einem ersten Schritt eine Lochung in ein ebenes Blech eingebracht. Dazu kann beispielsweise ein dünnes Alublech über ein Stanzwerkzeug geführt werden. Alternativ zum Stanzen der Löcher könnten diese auch gebohrt werden. Sodann erfolgt ein Ablegen oder ein Weitertransport des gelochten Blechs. Im nachfolgenden Schritt wird das gelochte Blech geriffelt, gewellt oder gefaltet (z.B. plissiert), d. h. mit einer dreidimensionalen Struktur versehen. Gemäß dieser Verfahrensvariante erfolgt die Bearbeitung also in unterschiedlichen Bearbeitungsstationen.

In einer zweiten Verfahrensvariante erfolgt die Bearbeitung in einer Bearbeitungsmaschine in einem Durchlauf: Während dem Riffeln, Wellen oder Falten (z.B. Plissieren) eines Blechs wird gleichzeitig eine Lochung in das Blech eingebracht. Ein solcher Inlineprozeß erlaubt in vorteilhafter Weise eine besonders kostengünstige Herstellung der Separatorbleche. Als Ausgangsmaterial für die Herstellungsverfahren kann in beiden Verfahrensvarianten entweder ein Blech in Bogenform oder in Rollenform verwendet werden. Wird ein Blech in Rollenform verwendet, so muss dieses noch abgelängt und das Separatorblech so auf die richtige Länge beschnitten werden.

Die beschriebene Erfindung und die beschriebenen vorteilhaften Weiterbildungen der Erfindung stellen auch in Kombination miteinander - soweit dies technisch sinnvoll ist - vorteilhafte Weiterbildungen der Erfindung dar.

Hinsichtlich weiterer Vorteile und in konstruktiver und funktioneller Hinsicht vorteilhafter Ausgestaltungen der Erfindung wird auf die Unteransprüche sowie die Beschreibung von Ausführungsbeispielen unter Bezugnahme auf die beiliegenden Figuren verwiesen.

### Ausführungsbeispiel

Die Erfindung soll an Hand beigefügter Figuren noch näher erläutert werden. Einander entsprechende Elemente und Bauteile sind in den Figuren mit gleichen Bezugszeichen versehen. Zugunsten einer besseren Übersichtlichkeit der Figuren wurde auf eine maßstabsgetreue Darstellung verzichtet.
Es zeigen in schematischer Darstellung
- Fig. 1: ein Separatorblech für einen Filter gemäß der Erfindung
- Fig. 2: einen Filter in einer Übersichtsdarstellung
- Fig. 3a: eine erste Variante einer Lochung
- Fig. 3b: eine zweite Variante einer Lochung
- Fig. 4: unterschiedliche Lochgeometrien

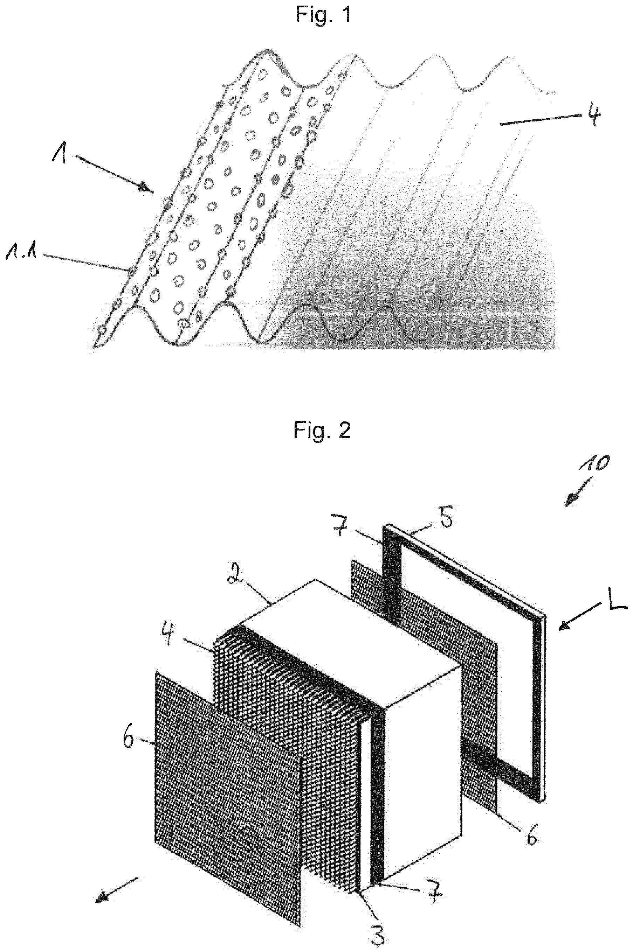

In Figur 1 ist ein Separatorblech 4 für einen erfindungsgemäßen Filter 10 dargestellt. Das Separatorblech 4 ist gewellt und über seine Fläche mit einer Lochung 1 versehen. Die Lochung 1 besteht aus einer Vielzahl von Löchern 1.1, welche in das Separatorblech 4 eingebracht sind. Zwecks einer besseren Übersichtlichkeit wurde nur ein Teil der Löcher 1.1 der Lochung 1 dargestellt. Ein solches Separatorblech 4 kann in einem Filter 10 eingesetzt werden, wie er in Figur 2 dargestellt ist. Der Filter 10 besitzt ein Gehäuse 2, in welchem eine Vielzahl von Lagen Filtermedium 3 und in Durchströmungsrichtung des Luftstroms L angeordnet sind. Im dargestellten Ausführungsbeispiel sind die Lagen Filtermedium 3 parallel zueinander angeordnet. Zwischen je zwei Lagen des Filtermediums 3 ist ein Separatorblech 4 angebracht, welches als Abstandshalter zwischen den beiden Lagen des Filtermediums 3 wirkt, so dass nicht zwei Lagen Filtermedium 3 aneinander anliegen, sondern vielmehr immer ein Luftstrom L an den Lagen des Filtermediums 3 vorbeigeführt werden kann und der Luftstrom L dabei gefiltert werden kann. Anströmseitig ist der Filter 10 zusätzlich noch mit einem Rahmen 5 versehen. Sowohl anströmseitig als auch abströmseitig werden die Lagen des Filtermediums 3 jeweils durch ein Metallgitter 6 geschützt, welches als Griffschutz wirkt und so verhindert, dass das Filtermedium beim Handhaben des Filters 10 beschädigt werden könnte. Der in Figur 2 dargestellte Filter 10 wird für seinen Einsatz in eine nicht dargestellte Filteraufnahme eingeschoben. Damit der Luftstrom L ausschließlich durch den Filter 10 geführt wird und sich kein Bypass zwischen Filter 10 und Filteraufnahme bildet, ist der Filter 10 mit einer Dichtung 7 versehen.

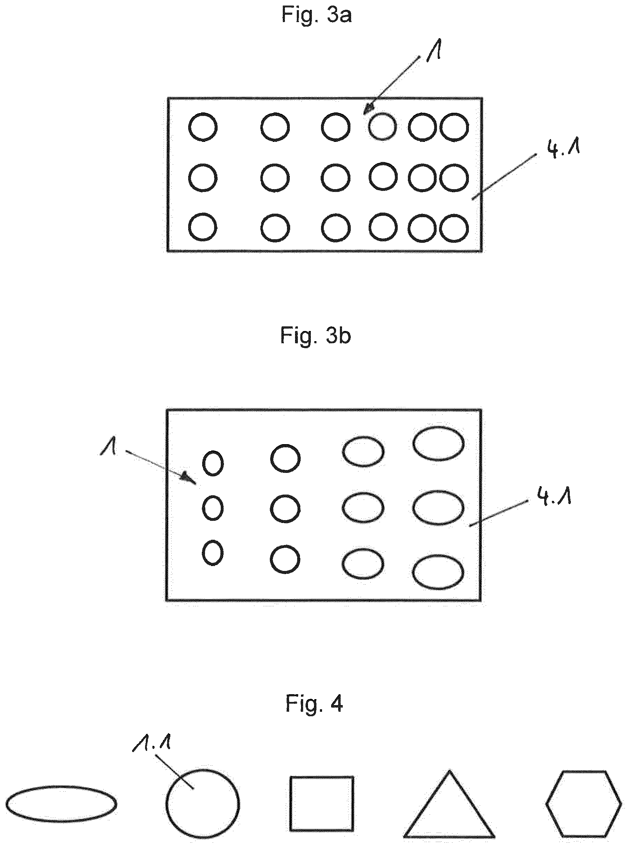

In den Figuren 3a und 3b sind zwei unterschiedliche Varianten eines Blechs 4.1 zur Fertigung eines Separatorblechs 4 dargestellt, wobei beide Bleche 4.1 mit einer progressiven Lochung 1 versehen sind. In der Variante gemäß Figur 3a wird die progressive Lochung 1 durch eine Variation der Dichte der Löcher 1.1 erreicht. In der Variante gemäß Figur 3b wird die progressive Lochung 1 durch eine Variation der Größe der Löcher 1.1 erreicht. In beiden Figuren ist die Anströnseite links und die Abströmseite rechts, d.h. ein nicht dargestellter Luftstrom L würde von links nach rechts an dem Separatorblech 4 vorbeigeführt werden.
In der dargestellten Ausführungsform wurde das Blech 4.1 noch nicht geriffelt, gewellt oder plissiert. Diese Strukturierung würde in einem nachfolgenden Prozessschritt erfolgen.

In Figur 4 sind unterschiedliche geometrische Ausgestaltungen von Löchern 1.1 dargestellt. Möglich ist beispielsweise, dass die Löcher der Lochung 1 eine runde, zum Beispiel eine ovale oder eine kreisrunde Form besitzen. Alternativ ist möglich, dass die Löcher der Lochung eine eckige Form besitzen, zum Beispiel quadratisch, dreieckig oder hexagonal ausgeformt sind. Die Aufzählung und Darstellung möglicher Lochformen an dieser Stelle ist las nur beispielhaft und nicht abschließend zu verstehen.

### Bezugszeichenliste

- 1: Lochung
- 1.1: Loch
- 2: Gehäuse
- 3: Lage Filtermedium
- 4: Separatorblech
- 4.1: Blech
- 5: Rahmen
- 6: Metallgitter
- 7: Dichtung
- 10: Filter

- L: Luftstrom

## Patentansprüche

1. Filter (10) zur Reinigung von Luft (L) aufweisend ein Gehäuse (2), in dem Gehäuse (2) angeordnete Lagen eines Filtermediums (3) und Separatorbleche (4), wobei zwischen je zwei Lagen des Filtermediums (3) je ein Separatorblech (4) angeordnet ist,
wobei
die Separatorbleche (4) mit einer Lochung (1) versehen sind,
**dadurch gekennzeichnet, dass**
ein jeweiliges Separatorblech (4) mit einer progressiven Lochung (1) versehen ist, derart, dass zum abströmseitigen Ende des Filters (10) hin der relative Flächenanteil der Löcher (1.1) auf dem Separatorblech hin zunimmt und, dass die progressive Lochung (1) insbesondere durch eine Variation der Dichte der Löcher (1.1) oder durch eine Variation der Größe der Löcher (1.1) erreicht wird.

2. Filter nach Anspruch 1, **dadurch gekennzeichnet, dass** die Separatorbleche (4) geriffelt, gewellt oder gefaltet sind.

3. Filter nach einem der vorangehenden Ansprüche, **dadurch**
**gekennzeichnet, dass**
die Separatorbleche (4) aus Aluminium sind.

4. Filter nach einem der vorangehenden Ansprüche, **dadurch**
**gekennzeichnet, dass**
die Löcher (1.1) der Lochung (1) rund oder eckig sind.

5. Filter nach einem der vorangehenden Ansprüche, **dadurch**
**gekennzeichnet, dass**
das Filtermedium (3) plissiert und/oder aus einem Glasfasermedium ist.

6. Filter nach einem der vorangehenden Ansprüche, **dadurch**
**gekennzeichnet, dass**
es sich bei dem Filter (10) um einen Kassettenfilter handelt.

7. Filter nach einem der vorangehenden Ansprüche, **dadurch**
**gekennzeichnet, dass**
der Filter (10) als Hochtemperaturfilter ausgelegt ist.

## Claims

1. Filter (10) for cleaning air (L), having a housing (2), layers of a filter medium (3), which are arranged in the housing (2), and separator plates (4), wherein a respective separator plate (4) is arranged between in each case two layers of the filter medium (3),
wherein
the separator plates (4) are provided with a perforated arrangement (1),
**characterized in that**
a respective separator plate (4) is provided with a progressive perforated arrangement (1) in such a way that the relative surface-area fraction taken up by the holes (1.1) on the separator plate increases in the direction of the outflow end of the filter (10), and **in that** the progressive perforated arrangement (1) is achieved, in particular, by varying the density of the holes (1.1) or by varying the size of the holes (1.1).

2. Filter according to Claim 1, **characterized in that** the separator plates (4) are ribbed, corrugated or folded.

3. Filter according to one of the preceding claims,
**characterized in that**
the separator plates (4) are made of aluminium.

4. Filter according to one of the preceding claims,
**characterized in that**
the holes (1.1) of the perforated arrangement (1) are round or angular.

5. Filter according to one of the preceding claims,
**characterized in that**
the filter medium (3) is pleated and/or made from a glass-fibre medium.

6. Filter according to one of the preceding claims,
**characterized in that**
the filter (10) is a cassette filter.

7. Filter according to one of the preceding claims,
**characterized in that**
the filter (10) is designed as a high-temperature filter.

## Revendications

1. Filtre (10) de nettoyage d'air (L), ledit filtre comportant un boîtier (2), des couches d'un milieu filtrant (3) qui sont disposées dans le boîtier (2) et des plaques métallique de séparation (4), chaque plaque métallique de séparation (4) étant disposée entre deux couches du milieu filtrant (3),
les plaques métalliques de séparation (4) étant pourvues d'une perforation (1),
**caractérisé en ce que**
une plaque métallique de séparation respective (4) est pourvue d'une perforation progressive (1) de telle sorte que la proportion de surface relative des trous (1.1) sur la plaque métallique de séparation augmente vers l'extrémité aval du filtre (10) et **en ce que** la perforation progressive (1) est réalisée notamment par variation de la densité des trous (1.1) ou par variation de la taille des trous (1.1).

2. Filtre selon la revendication 1, **caractérisé en ce que** les plaques métalliques de séparation (4) sont striées, ondulées ou pliées.

3. Filtre selon l'une des revendications précédentes, **caractérisé en ce que**
les plaques métalliques de séparation (4) sont en aluminium.

4. Filtre selon l'une des revendications précédentes, **caractérisé en ce que**
les trous (1.1) de la perforation (1) sont ronds ou carrés.

5. Filtre selon l'une des revendications précédentes, **caractérisé en ce que**
le milieu filtrant (3) est plissé et/ou formé d'un milieu en fibre de verre.

6. Filtre selon l'une des revendications précédentes, **caractérisé en ce que**
le filtre (10) est un filtre à cassette.

7. Filtre selon l'une des revendications précédentes, **caractérisé en ce que**
le filtre (10) est conçu comme un filtre à haute température.
